Europäisches Patentamt

European Patent Office

Office européen des brevets

(11) Publication number: **0 242 133**
**A1**

## (12) EUROPEAN PATENT APPLICATION

(21) Application number: 87303131.4

(51) Int. Cl.⁴: **B60T 11/22**

(22) Date of filing: 10.04.87

(30) Priority: 16.04.86 US 852826

(43) Date of publication of application:
21.10.87 Bulletin 87/43

(84) Designated Contracting States:
DE FR GB

(71) Applicant: **GENERAL MOTORS CORPORATION**
**General Motors Building 3044 West Grand**
**Boulevard**
**Detroit Michigan 48202(US)**

(72) Inventor: **Coleman, John R.**
**6660 Munger Road**
**Dayton Ohio 45459(US)**

(74) Representative: **Breakwell, John Neil Bower et**
**al**
**GM Patent Section Vauxhall Motors Limited**
**Luton Office (F6) P.O. Box No. 3 Kimpton**
**Road**
**Luton Bedfordshire LU2 OSY(GB)**

(54) **Master cylinder with reservoir mounting.**

(57) In a master cylinder having a reservoir mount, reservoir bayonets (28,30) or like projections extending into boss bores (20,22) of the master cylinder body (12) are at a reduced diameter established by worst-case tolerancing, to accommodate all the tolerances along the bore centre-line plane (50) of the reservoir mount. This results in greater side-to-side clearance perpendicular to the bore centre-line than is desired in many instances, so tending to give a relatively loose fit of the reservoir (18).

To reduce this side-to-side clearance, locally raised ribs (82,84,86,88) or the like are added to the reservoir mount bayonets to better match the internal diameters of the machined body reservoir bosses provided by the boss reservoir mounting surfaces.

Specifically, the clearance is reduced by locally increasing the diameter of the reservoir bayonet mounts based on worst-case tolerancing, considering only one reservoir mounting member and its associated mounting boss (14,16) independently of the other mounting member and its associated mounting boss.

Fig. 2

## MASTER CYLINDER WITH RESERVOIR MOUNTING

This invention relates to a master cylinder assembly as specified in the preamble of claim I, for example as disclosed in US-A-4 133 178.

The invention is specifically concerned with the mounting of a reservoir body on a master cylinder body.

More particularly, the invention is concerned with such a mounting when the master cylinder assembly formed by the reservoir body and the cylinder body is of the dual master cylinder type.

It has been common practice to manufacture master cylinders with a plurality of pressurising pistons acting on brake fluid in a plurality of pressurising chambers which are located in axial alignment in a bore in a cylinder body, or alternatively in axially parallel bores in a cylinder body.

Examples are shown in US-A-2 157 733, US-A-2 732 918, US-A-3 021 678, US-A-3 157 034 and US-A-3 291 263, as well as in the other United States patents noted below.

In order to provide a separate reservoir body for brake fluid, in more recent years the reservoir (the reservoir body) has been attached to the cylinder body by means of a projection and a boss or mounting bore for each bore or bore section having a pressurising chamber.

Examples of such arrangements are shown in US-A-4 004 707, US-A-4 132 073, US-A-4 133 178, US-A-4 133 287, US-A-4 208 881 and US-A-4 213 535.

In general, these arrangements have two or more openings which are spaced apart in the bottom of the reservoir body, which may or may not be connected to a spigot or bayonet formed or secured to the bottom of the reservoir body, and which fit over or extend into bores formed in similarly spaced-apart bosses which are a part of a cylinder body. Openings through the bayonets and the cylinder body bosses permit brake fluid to flow between the bore or bores of the master cylinder body and the reservoir, in a manner well known in the art.

To ensure that the master cylinder reservoir will always be assembled properly into or on the master cylinder body, the diameters of the openings formed in the bottom of the reservoir, as exemplified by the aforesaid US-A-4 004 707, or of the bayonets and their seals, as exemplified by the other United States patents noted above, must be so sized as to accommodate all the tolerances along the centre-line joining the two bores in the cylinder body bosses, as well as the tolerances in the associated portions of the reservoir body itself.

The basic diameters of the bayonets must therefore be sufficiently small in relation to the bosses or openings with which they mate to accommodate what is commonly known as worst-case tolerancing, or conversely openings fitting over bosses must be sufficiently larger.

Because of these differences in the diameters, there is often excessive clearance which allows the reservoir body to fit somewhat loosely on the cylinder body, particularly as concerns the side-to-side relationship.

It is therefore desirable to minimise the excessive side-to-side clearance by better matching the diameter of the bayonet, for example, in the master cylinder mounting bore with which each bayonet is associated, rather than having to allow for worst-case tolerancing involving both of the reservoir mounting bores and both of the mounting bayonet members, or even more such bores and bayonet members if three or more such combinations are provided.

Such considerations include not only the individual diameters of each such arrangement, but also the axial spacings between such plurality of arrangements. Since the worst-case tolerancing must be considered in the plane joining the axes of the bosses and bayonet members, the diameters cannot be increased in this plane, contrary to what would otherwise be desired.

The present invention is concerned with providing a master cylinder assembly having a reservoir mounting arrangement which provides additional stability for the reservoir body on the cylinder body, without prejudicing the capability of assembling the reservoir body on to the cylinder body.

To this end a master cylinder assembly in accordance with the present invention is characterised by the features specified in the characterising portion of claim I.

It is therefore a feature of the invention that the basic radius or diameter of each of the bayonet members be locally increased in the side-to-side sense in a plane which intersects the plane passing through the plurality of cylinder body bosses and bores.

It is preferable that such localised increase occur in a plane which is perpendicular to the plane joining the axes of the cylinder body bores.

In practising the invention, the increased diameter of the respective bayonet member is established by worst-case tolerancing in the second-noted plane, by involving only the individual reservoir mounting bore in the cylinder body and the individual reservoir mounting bayonet member which extends into that bore. This arrangement will provide additional stability for the reservoir body in the side-to-side sense, while continuing to ensure the capability of assembling the reservoir on to the master cylinder body.

The preferred embodiment of a master cylinder assembly in accordance with the present invention is disclosed in the context of a master cylinder assembly having spaced-apart bosses with mounting bores formed therein in axially parallel relation, but the invention is also applicable to arrangements of the type shown in the aforesaid US-A-4 004 707, in which the reservoir bottom has flanged openings which extend over machined master cylinder body bosses. In either type of arrangement, like considerations apply.

The invention may be applied to parallel-bore master cylinders in which the reservoir is mounted across the plural portions of the master cylinder body containing those bores, as shown in some of the above-noted United States patents, instead of the tandem-type dual master cylinder arrangement disclosed in others of the above-noted United States patents. However, the preferred embodiment is illustrated in the context of the commonly employed tandem-type dual master cylinder arrangement.

In the preferred embodiment illustrated, the reservoir mounting bayonet members are each formed with radius or diameter-increasing rib-like protuberances (referred to as ribs) which extend in a direction axially parallel to the bayonet member and lie in a plane passing through the ribs and the axis of the bayonet member so that the plane is substantially perpendicular to the plane passing through the axes of the cylinder body mounting bores. In the preferred embodiment the ribs extend along substantially the entire length of the side wall of each of the bayonet members. In the preferred embodiment, diametrically opposed ribs are provided, although in some circumstances it is possible for only one such rib to be provided, and in other circumstances for more than two ribs to be provided. For example, three ribs could be located on radii extending from the bayonet member axis, but not necessarily in precisely the same plane for all such rib radii.

It is also within the scope of the invention for other types of protuberance, for example a plurality of nubs, to be provided in place of a rib.

Also, it is possible for the ribs to be intersected by one or more seal grooves containing seals which operate to seal the bayonet member to the cylinder wall of the mounting bore with which it is associated. However, even though in such an arrangement the rib is divided into sections, it effectively functions as a single rib, and is referred to herein as one rib.

In the preferred embodiment which is illustrated and described, at least one of the reservoir body mounting arrangements including a bayonet member and mounting bore is provided with the radius-increasing means, and preferably both or all such mounting arrangements are constructed in this manner.

More particularly, the invention is preferably incorporated in a master cylinder assembly having a cylinder body and a reservoir body, the cylinder body having first and second reservoir mounting bosses respectively having first and second cylindrically formed reservoir mounting surfaces arranged in axially parallel spaced relation with the axes thereof located in a first plane passing through the cylinder body. The reservoir body has first and second mounting members extending from the bottom of the reservoir in axially parallel spaced relation, and respectively mating with the first and second cylinder body reservoir mounting surfaces in mounted sealing relation to deliver brake fluid between the interior of the reservoir body and the interior of the cylinder body. The reservoir body mounting members have basic radii which are established by worst-case tolerancing in the first plane, this worst-case tolerancing involving the reservoir mounting bosses and the reservoir mounting surfaces and also the reservoir mounting members.

The improvement to which the invention more specifically relates is that of having at least one of the first reservoir mounting surfaces, or at least one of the reservoir mounting members, or at least one of each such, with localised basic radius-changing means formed thereon and located in a second plane which passes through the axis of the surface and/or member on which the localised basic radius-changing means is formed, the second plane intersecting the first plane. The localised changed radius of the selected surface or surfaces and member or members, when taken through and including the radius-changing means thereon, is different from the basic radius of that selected surface or surfaces and member or members.

This localised changed radius is preferably established by worst-case tolerancing in the second plane Such worst-case tolerancing involves only the first reservoir mounting boss and the first reservoir mounting surface and the first reservoir mounting member.

In another aspect of the invention, the master cylinder assembly in which the invention is incorporated has a cylinder body and a reservoir body, the cylinder body having first and second reservoir mounting bores formed therein in axially parallel spaced relation, with the axes thereof located in a first plane passing through the cylinder body. The reservoir body has first and second mounting bayonet members extending therefrom in axially parallel spaced relation, and respectively received in the cylinder body mounting bores in mounted sealing relation to communicate brake fluid between the interior of the reservoir body and the interior of the cylinder body. The bayonet members have basic radii established by worst-case tolerancing in the first plane. Such worst case-tolerancing involves both of the reservoir mounting bores and both of the mounting bayonet members. The improvement to which the invention is specifically directed comprises the first mounting bayonet member having localised basic radius-increasing means formed thereon and located in a second plane passing through the axis of the first mounting bayonet member and intersecting the first plane. The radius of the first mounting bayonet member in that second plane, taken through and including the radius-increasing means, is greater than the basic radius of the first mounting bayonet member, and is preferably established by worst-case tolerancing in the second plane. Such worst-case tolerancing involves only the first reservoir mounting bore and the first mounting bayonet member.

In another aspect of the invention, the invention more specifically involves having such localised basic radius-increasing means formed on the first and the second mounting bayonet members. The radius in the second plane noted above, taken through each of the radius-increasing means, involves worst-case tolerancing only for the particular mounting bayonet member and the particular reservoir mounting bore with which that particular radius-increasing means is associated.

In a further aspect of the invention, the second plane noted above in any of those types of arrangement is substantially perpendicular to the first plane, and consideration is given to the basic diameter and the localised basic diameter-increasing means.

In additional particular aspects of the invention, the invention relates specifically to a provision of diametrically opposed axially extending ribs which provide the radius or diameter-increasing means of any of the above-noted arrangements.

In any of the arrangements in accordance with the invention discussed above, the reservoir body is made more stable in a side-to-side sense by reduction of the side-to-side clearance to better match the radius or diameter of the particular reservoir boss or bore. This makes for a rigid and stronger interface between the reservoir body and the cylinder body.

In the drawing:

Figure I is an elevational view, with parts broken away and in section, of a preferred embodiment of a master cylinder assembly in accordance with the present invention;

Figure 2 is an enlarged fragmentary cross-sectional view, with parts broken away, on the line 2—2 of Figure I, in the direction of the arrows; and

Figure 3 is an enlarged fragmentary elevational view on the line 3—3 of Figure I, in the direction of the arrows.

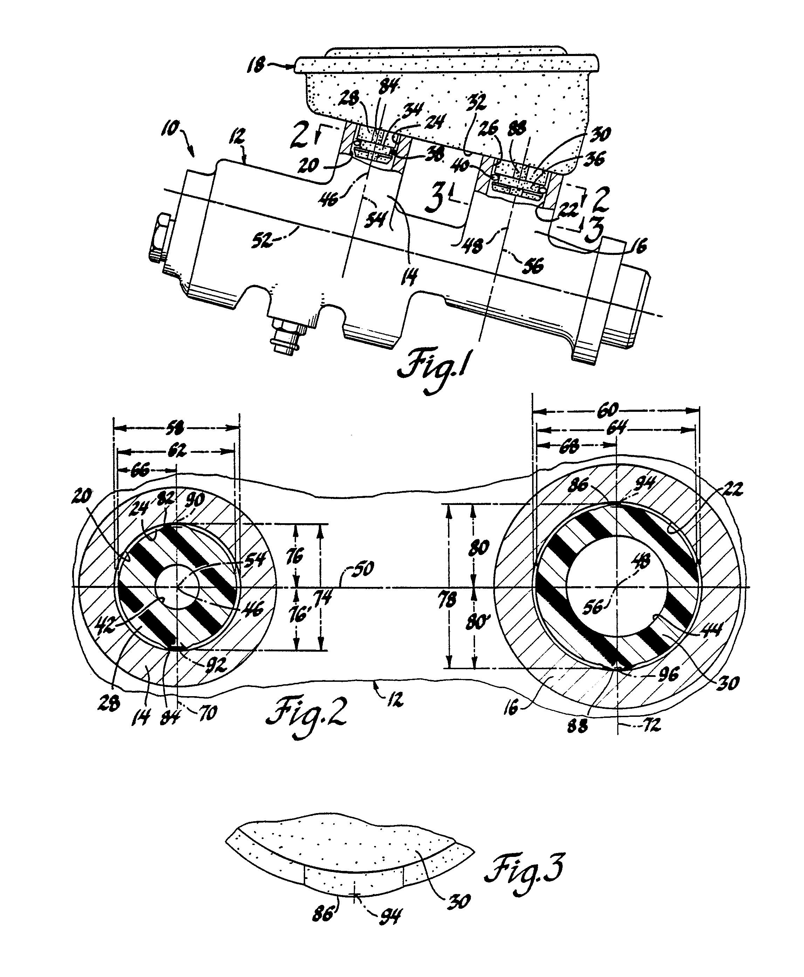

With reference now to the drawing, there is shown in Figure I a master cylinder assembly I0 which is illustrated as being a dual master cylinder having the conventional type of arrangement of two pressurising pistons (not shown) arranged in tandem in a single bore (not shown) formed in a cylinder body I2. The cylinder body I2 is illustrated as having a first boss I4 and a second boss I6 integrally formed therewith and extending upwardly so as to provide a mounting for a reservoir body I8. The bosses I4 and I6 also provide for the delivery of brake fluid between the interior of the reservoir body I8 and the interior of the cylinder body I2, as is well known in the art.

Such arrangements are disclosed for example in several of the above-noted United States patents.

The specific arrangement shown in the drawing is the preferred embodiment only, modifications of the general arrangement of the master cylinder assembly I0 being possible within the scope of the claims. For example, in some instances three or more tandem pressurising pistons may be provided in the bore of the cylinder body, and a boss may then be provided for each of the pressurising chambers associated with those pistons. Another possibility is for the master cylinder assembly I0 to be of the type wherein the cylinder body I2 has two or more parallel bores therein, with the reservoir body I8 extending generally transversely of the body, rather than generally longitudinally thereof as illustrated in Figure I, so as to be mounted on bosses which provide access to each of the axially parallel cylinder bores.

In some instances there is no need for bosses extending above the main portion of the cylinder body I2. in that instead the mounting arrangement may simply be recessed in a main part of the cylinder body.

In the preferred embodiment illustrated, each of the bosses I4 and I6 has a cylindrically formed reservoir mounting bore, with a mounting bore 20 being provided in the boss I4 and a mounting bore 22 being provided in the boss I6. The boss I4 has a cylindrically formed reservoir mounting surface 24 defined by the inner wall of the mounting bore 20. Similarly, the boss I6 has a cylindrically formed reservoir mounting surface 26 formed by the inner wall of the mounting bore 22.

The reservoir 18 has a first mounting member 28 and a second mounting member 30 which both extend from the bottom 32 of the reservoir body 18. The mounting members 28 and 30 are illustrated as spigots (bayonets) extending downwardly from the bottom 32 outwardly of the reservoir body. In some instances the mounting members may comprise mounting flanges which extend upwardly or downwardly from the bottom 32. Upwardly extending flanges may extend into the interior of the reservoir body 18, much like the mounting flanges disclosed in the aforesaid US-A-4 004 707. However, in the preferred embodiment here described the mounting members will be referred to as bayonet members.

The two bayonet members 28 and 30 are of similar construction. However, for the purpose of preventing incorrect assembly of the reservoir body 18 on the cylinder body 12, the diameters of the two bayonet members, and correspondingly the diameters of their mating cylindrical mounting surfaces, may be different from one another.

The bayonet members 28 and 30 are provided with respective grooves 34 and 36, and seals 38 and 40 are received in the respective grooves and sealingly engage the respective surfaces 24 and 26, to provide sealing for the bayonet members 28 and 30, and therefore the reservoir body 18, with respect to the cylinder body 12.

The bayonet members 28 and 30 are likewise provided with respective axially extending passages 42 and 44 which provide fluid communication between the interior of the reservoir body 18 and the lower portions of the mounting bores 20 and 22, for providing fluid communication, in a manner well known in the art, to the piston bore or bores in the cylinder body 12.

The bayonet members 28 and 30 have respective axes 46 and 48 which are preferably parallel to each other, and lie in a common plane 50 which also passes through the cylinder body 12.

In the preferred embodiment illustrated, the axes 46 and 48 may intersect the axis 52 of the cylinder body 12, which axis may also be the axis of the pressurising chamber bore formed therein, as well known in the art and for simplicity not illustrated herein. In the most common case, the axes 46 and 48 will be coincident with the respective axes 54 and 56 of the mounting bores 20 and 22. However, in some instances either or both of the axes 46 and 48 may be offset from their respectively associated axes 54 and 56.

Likewise, in the most common case the axes 46, 48, 54 and 56 will intersect the axis 52, but this specific arrangement is not essential to the invention.

To provide a reference for further description (see particularly Figure 2 in this respect), the diameter 58 of the bore 20 is illustrated as being the bore diameter lying in the plane 50 passing through the bore axis 54, and correspondingly the diameter 60 of the bore 22 is illustrated as being the bore diameter lying in the plane 50 passing through the bore axis 54.

Similarly, the basic diameter 62 of the bayonet member 28 is illustrated as lying in the plane 50 passing through the axis 46 of the bayonet member 28, and correspondingly the basic diameter 64 of the bayonet member 30 is shown as lying in the plane 50 passing through the axis 48 of the bayonet member 30.

In each instance in which reference is made herein to a diameter, one-half of that diameter is the corresponding radius of the element in question. Thus the basic radius 66 of the bayonet member 28 is one-half of its basic diameter 62, and the basic radius 68 of the bayonet member 30 is one-half of its basic diameter 64.

Also, and again to provide reference for further description, a second plane 70 passes through the coincident axes 46 and 54 and intersects the plane 50, and is preferably substantially perpendicular to that plane, as illustrated, and correspondingly a third plane 72 passes through the coincident axes 48 and 56 and intersects the plane 50, and is likewise preferably substantially perpendicular to that plane.

As will be more specifically described hereinafter, the bayonet member 28 has a localised increased diameter 74 lying in the plane 70, with the localised increased radii 76, 76' thereof each one-half of the diameter 74. Correspondingly, the bayonet member 30 has a localised increased diameter 78 lying in the plane 72, one-half of that diameter comprising the localised increased radii 80 and 80'.

The differences in the diameters 58 and 62, and in the diameters 60 and 64, are usually determined by worst-case tolerancing involving both of the mounting bores 20 and 22, as well as both of the bayonet members 28 and 30. This worst-case tolerancing is taken in the plane 50, and must take into account, by way of example, the allowable tolerances of the distance between the axes 46 and 48, the distance between the axes 54 and 56, the diameters 58 and 60, and the diameters 62 and 64.

Although the actual differences in the diameters may not be as great as has been illustrated in the drawing for the purpose of clear illustration, those diameter differences are nevertheless sufficient to permit substantial side-to-side movement of the reservoir body 18.

The invention is primarily directed to the elimination of, or at any rate the substantial minimising of, such side-to-side movements of the reservoir body 18 as could otherwise occur after the master cylinder assembly has been installed in a working device such as an automotive vehicle, and to achieve this without the need for additional fasteners.

In the preferred embodiment illustrated in the drawing, the basic diameter 62 of the bayonet member 28 is locally increased in the plane 70 by providing protuberances on the outer surface of the bayonet member, these protuberances being formed as ribs 82 and 84. Similar ribs 86 and 88 are provided on the bayonet member 30. These ribs provide locally increased radii 76, 76' and 80, 80', respectively. In terms of diameters, the ribs provide locally increased diameters 74 and 78 respectively.

The ribs 82, 84, 86 and 88 may be considered to have respective axes 90, 92, 94 and 96 extending longitudinally therethrough, respectively parallel to the axes 46 and 48 of the bayonet members 28 and 30, such that in the preferred embodiment, for example, the plane 70 passes through the axes 46, 90 and 92, and the plane 72 passes through the axes 48, 94 and 96.

The locally increased radius 76 of the rib 82, for example, could however be somewhat offset from the plane 70, if required, so that it lies in a different plane intersecting only the axis 46 and the axis 90.

In some instances it may be suitable for two such ribs 82 to be provided on either side of the plane 70, such that their respective radii are angularly displaced from that plane. However, this displacement must not be so great that the worst-case tolerance for the entire assembly as noted above has to be considered in determining the increased size of the appropriate locally increased radius 76 in relation to the basic radius 66.

Likewise, the rib 84 may be similarly offset, either diametrically opposite the offset rib 82 or on the same side of the plane 70 as the possible offset of the rib 82.

In some instances it may be desirable to provide more than one rib on one side of the bayonet member 28, or occasionally even on both sides. This may be done within the scope of the invention provided that the locally increased radii remain established by worst-case tolerancing involving only the one respective mounting member and mounting surface.

Similar considerations and modifications may apply to the bayonet member 30.

The ribs 82, 84, 86 and 88 are shown extending through substantially the entire longitudinal length of the bayonet members 28 and 30 which are received in the mounting bores 20 and 22. In so extending, these ribs are intersected by the seal grooves 34 and 36, and are therefore divided into upper and lower sections. Functionally, however, they are considered to be single ribs.

Other types of protuberance may be provided which do not extend through the entire longitudinal length of the bayonet members. For example, instead of a rib, two or more bumps or mounds may be provided which accomplish the same effect. Ribs are preferred, however, since it is much easier to mould them as part of the reservoir body 18 than it would be to provide longitudinally spaced bumps or mounds.

If the bayonet members 28 and 30 and the bosses 14 and 16 are constructed in the converse fashion so that the portion formed as a part of the reservoir body 18 fits around the bosses instead of inside the bosses, it would be within the scope of the invention to provide the ribs or equivalent on the interior of the projections from the reservoir body or on the outside of the bosses providing appropriate mounting surfaces.

An important aspect of a master cylinder assembly in accordance with the present invention is thus that the side-to-side clearance between the reservoir body mounting members and the cylinder body mounting members should be minimised, whereas the lengthwise clearances remain essentially the same as earlier provided for worst-case tolerancing.

Use of the present invention avoids the need for providing flanges and screws to tightly secure the reservoir body in position (such being disclosed in the aforesaid US-A-4 213 535, for example) while still providing a strong and rigid interface between the reservoir body and the cylinder body.

## Claims

1. A master cylinder assembly in which a cylinder body (12) has first (14) and second (16) reservoir-mounting bosses respectively having first (24) and second (26) cylindrically formed reservoir-mounting surfaces arranged in axially parallel spaced relation with the axes (46,48) thereof located in a first plane (50) passing through the cylinder body (12), and a reservoir body (18) has first (28) and second (30) mounting members extending from the bottom (32) thereof in axially parallel spaced relation and respectively mating with the first and second reservoir-mounting surfaces (24,26) in mounted sealing relation for delivery of brake fluid between the interior of the reser-

voir body (I8). and the interior of the cylinder body (I2), characterised in that, in an assembly in which the reservoir-mounting members (28,30) have basic radii (66,68) established by worst-case tolerancing in the first plane (50) involving the reservoir-mounting bosses (I4,I6) and the reservoir-mounting surfaces (24,26) and also the reservoir-mounting members (28,30), at least a selected one (24,28) of the reservoir-mounting surfaces (24,26) and the reservoir-mounting members (28,30) has localised basic radius-changing means (82,84) formed thereon and located in a second plane (70) passing through the axis (46,48) of the said selected one (24,28) and intersecting the first plane (50), and the localised changed radius (76) of the said selected one (24,28) in the second plane (70) taken through and including the radius-changing means (82,84) is different from the basic radius (66) of the said selected one (24,28) and is established by worst-case tolerancing in the second plane (70) involving only the first reservoir-mounting member (28) and the first reservoir-mounting boss (I4) including the first reservoir-mounting surface (24).

2. A master cylinder assembly according to claim I, characterised in that the second plane (72) is substantially perpendicular to the first plane (70).

3. A master cylinder assembly according to claim I or 2, characterised in that the first and second reservoir-mounting surfaces of the cylinder body (I2) comprise respective bores (20,22) formed in the respective bosses (I4,I6), and that the first and second mounting members of the reservoir body (I8) comprise respective bayonet members (28,30) extending therefrom.

4. A master cylinder assembly according to any one of claims I to 3, characterised in that the magnitudes of the basic radii (66,68), and also of the localised changed radius or radii (76,76') resulting from the localised basic radius-changing means (82,84), are established in terms of the diameters of the respective members (28,30).

5. A master cylinder assembly according to claim 3, characterised in that the basic radii (66,68) of the bayonet members (28,30) are established by worst-case tolerancing in the first plane (50) involving both of the reservoir-mounting bores (20,22) and both of the bayonet members (28,30), and the radius (76) of the first bayonet member (28) in the second plane (70) through and including the radius-increasing means (82,84) is established by worst-case tolerancing in the second plane (70) involving only the first reservoir-mounting bore (20) and the first bayonet member (28).

6. A master cylinder assembly according to claim 3, characterised in that the first and second bayonet members (28,30) each have localised basic radius-increasing means (82,84,86,88) formed thereon respectively located in the second (70) and a third plane (72) respectively passing through the axes (46,48) of the first and second bayonet members (28,30) and intersecting the first plane (50), the radius of the first bayonet member (28) in the second plane (70) through and including radius-increasing means (82,84) on the first bayonet member (28) is greater than the basic radius (66) of the first bayonet member (28) and is established by worst-case tolerancing in the second plane (70) involving only the first reservoir-mounting bore (20) and the first bayonet member (28), and the radius (68) of the second bayonet member (30) in the third plane (72) through and including the radius-increasing means (86,88) on the second bayonet member (30) is greater than the basic radius (68) of the second bayonet member (30) and is established by worst-case tolerancing in the third plane (72) involving only the second reservoir-mounting bore (22) and the second bayonet member (30).

7. A master cylinder assembly according to any one of claims I to 6, characterised in that the localised basic radius-changing means comprise a pair of diametrically opposed axially extending ribs (82,84,86,88) formed on the respective member (28,30), with the rib axes extending parallel to the axis of the member (28,30).

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 820 299 (TEVES) * Page 7, line 22 - page 9, line 9; figures 1,2 * | 1 | B 60 T 11/22 |
| | --- | | |
| A | GB-A-2 074 678 (NISSAN) | | |
| | --- | | |
| A,D | US-A-4 133 178 (BROOKS) | | |
| | ----- | | |

TECHNICAL FIELDS
SEARCHED (Int. Cl.4)

B 60 T 11/00

The present search report has been drawn up for all claims

| Place of search | Date of completion of the search | Examiner |
|---|---|---|
| THE HAGUE | 21-07-1987 | HARTEVELD C.D.H. |